# FASCICULE DE BREVET EUROPEEN

(11) **EP 1 793 083 B1**
(45) Date de publication et mention de la délivrance du brevet: **14.10.2009**
(21) Numéro de dépôt: 06077151.6
(22) Date de dépôt: 01.12.2006
(51) Int. Cl.: F01D 5/18

(54) **Aube de turbine à refroidissement et à durée de vie améliorés**
Gekühlte Turbinenschaufel mit verlängerter Lebensdauer
Cooled turbine blade with enhanced lifespan

(30) Priorité: 05.12.2005 FR 0512297
(43) Date de publication de la demande: 06.06.2007
(73) Titulaire: SNECMA, 75015 Paris (FR)
(72) Inventeur: Boury, Jacques, 77720 Saint Ouen en Brie (FR); Eneau, Patrice, 77550 Moissy Cramayel (FR); Moreau, Guy, 91330 Yerres (FR)
(74) Mandataire: Nguyen, Dominique

(56) Documents cités:
- US-A- 4 770 608
- US-B1- 6 368 060

## Description

La présente invention concerne le domaine des aubes de turbine, notamment une aube de turbine de turbomachine à refroidissement et à durée de vie améliorés.

Une turbomachine aéronautique comporte classiquement un compresseur, une chambre de combustion et une turbine. Le rôle de la turbine est d'assurer l'entraînement en rotation du compresseur en prélevant une partie de l'énergie de pression des gaz chauds sortant de la chambre de combustion et en la transformant en énergie mécanique.

Une turbine axiale comprend classiquement au moins un distributeur, constitué d'une grille d'aubes fixes par rapport au carter de la turbomachine, et au moins une roue mobile, comportant un ensemble d'aubes susceptible d'être mis en rotation, placée derrière le distributeur.

La turbine, située en aval de la chambre de combustion, est l'organe de la turbomachine qui travaille dans les conditions les plus sévères. Elle est notamment soumise à des contraintes thermiques importantes générées par les gaz chauds en sortie de chambre.

La résistance aux contraintes thermiques de la turbine constitue la limitation la plus importante pour le fonctionnement de la turbomachine. Cette limitation fixe le débit maximal de combustible que l'on peut injecter dans la chambre de combustion de la turbomachine et la poussée maximum que l'on peut obtenir pour une turbomachine. La résistance thermique de la turbine dépend de la température tolérée par les aubes. A chaque température correspond une durée de vie de la turbine, cette durée de vie diminuant lorsque la température augmente. Les solutions existantes pour améliorer la résistance thermique des aubes de turbine consistent essentiellement à améliorer les matériaux les constituant et à les refroidir en cours de fonctionnement.

Classiquement, le refroidissement de la paroi d'une aube de turbine s'effectue par échange de calories entre les gaz chauds et l'air circulant à l'intérieur de l'aube, plus exactement par convection forcée d'un air de refroidissement sur les parois internes de l'aube. Pour cela, il est connu de concevoir les aubes de turbines avec des cavités radiales de refroidissement dans lesquelles s'écoulent de l'air de refroidissement. Cet air de refroidissement au contact des parois chaudes des cavités radiales crée un échange thermique différent sur chacune d'elles et en particulier entre les parois intrados et les parois extrados.

Le document EP1008724 illustre, en figure 6, un exemple d'aube de turbine comportant une pluralité de cavités radiales. Ces cavités radiales peuvent communiquer entre elles par leurs extrémités pour former un circuit de refroidissement dit en serpentin. Par exemple, le circuit de refroidissement 36, délimité par des parois 34 et comportant une entrée 36A et une extrémité terminale 36B, est composé de trois cavités radiales communicant par des canaux de retournement 37A et 37B.

Les cavités radiales peuvent également communiquer entre elles par des canaux, sensiblement plus petits que les canaux de retournement. L'étroitesse de ces canaux permet de projeter l'air de refroidissement sous pression de manière à favoriser les échanges thermiques par convection. Par exemple, dans le document EP1008724 en figure 5 et 6, une cavité de bord de fuite 72 et une cavité 41B en amont de celle-ci, séparées par une paroi 75, communiquent entre elles par des canaux 74 localisés dans la paroi 75.

Cette configuration des canaux 74 n'est cependant pas satisfaisante puisque l'air de refroidissement en provenance de la cavité amont 41B via les canaux 74 se répartit très mal dans la cavité de bord de fuite 72, en particulier un gradient thermique important existe entre la paroi intrados et la paroi extrados de cette cavité de bord de fuite 72.

En effet, l'écoulement des gaz chauds en provenance de la chambre de combustion entraîne une distribution inégale des températures sur l'intrados et l'extrados des aubes de turbine. Les gaz chauds arrivent directement sur la paroi intrados des aubes de turbine. Ainsi, l'intrados d'une aube turbine est soumis à des températures plus importantes que son extrados, ce qui a pour conséquence de générer un gradient thermique entre les parois de l'intrados et de l'extrados nuisible à la durée de vie de l'aube.

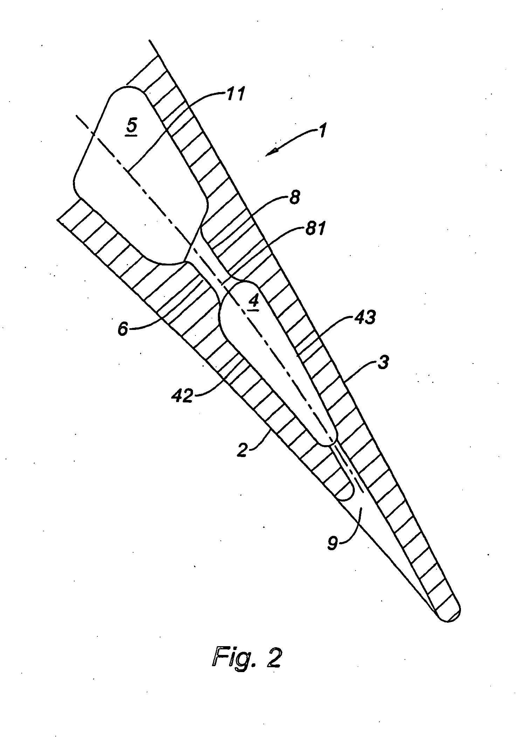

D'autres documents de l'art antérieur illustrent également des aubes de turbine présentant le même défaut, notamment les documents US4767268, US5356265, US5720431 et US6206638. Comme le montrent tous ces documents, des aubes comportant une configuration similaire, c'est-à-dire avec une première cavité radiale de bord de fuite et une seconde cavité radiale en amont, séparées par une paroi interne muni de canaux, comportent systématiquement des canaux dont l'axe est orienté selon une direction parallèle à une tangente d'une portion du squelette de l'aube passant à travers la paroi interne. Sur la figure 2 de la présente demande, le squelette 11 de l'aube, également appelé ossature ou ligne moyenne, est la ligne constituée par l'ensemble des points équidistants de l'intrados 2 et de l'extrados 3.

Dans cette configuration, l'air se répartit très mal dans la première cavité de bord de fuite 4. L'étroitesse de la cavité de bord de fuite 4 et la distribution d'air dans un plan se confondant au squelette 11 provoquent un échange thermique sur la surface interne 42 de la paroi intrados 2 voisin de la surface interne 43 de la paroi extrados 3. Cet inconvénient est accentué par le fait que le squelette 11 au niveau de la seconde cavité 5 est situé dans le prolongement des axes des canaux 8.

Mécaniquement, une aube de turbine possède une bonne durée de vie si ses deux parois intrados 2 et extrados 3 présentent une température métal voisine, c'est-à-dire un faible gradient thermique. Or, l'échange thermique des gaz chauds extérieurs à une cavité est plus important à l'intrados 2 qu'à l'extrados 3. Aussi, pour compenser ce phénomène et présenter un gradient thermique faible, il est nécessaire de refroidir intensément la surface interne 42 de la paroi intrados 2 dans la première cavité radiale de bord de fuite 4, ce que propose de faire l'invention.

Pour résoudre ce problème, il a été proposé, par exemple dans les documents US 6368060 et US 4770608, une aube de turbine, comportant une paroi intrados, une paroi extrados, au moins une première cavité radiale de bord de fuite, au moins une seconde cavité radiale en amont de la cavité de bord de fuite, une paroi interne séparant les cavités radiales et comprenant au moins un canal reliant les cavités entre elles, ledit canal étant orienté selon un axe coupant la surface interne de la paroi intrados dans la première cavité radiale de bord de fuite.

L'objectif de la présente invention est d'optimiser la distribution de l'air de refroidissement dans une aube de turbine pour en améliorer la durée de vie.

A cet effet, il est prévu une aube de turbine telle que décrite ci-dessus comportant, en outre, en amont et en aval des raccordements avantageux avec les parois des cavités améliorées. Celles-ci sont décrites plus en détails ci-après.

Avantageusement, ledit axe est incliné d'un angle compris entre 5° et 70° par rapport à une tangente à une portion d'un squelette de l'aube, ladite portion de squelette étant localisée à l'intérieur du canal. De préférence, cet angle α est compris entre 5° et 35°.

Avantageusement, la présente invention s'applique aussi bien à une aube fixe de turbine qu'à une aube mobile de turbine.

La présente invention concerne également une turbine comportant au moins une telle aube ainsi qu'une turbomachine comportant une telle turbine.

L'invention sera mieux comprise et d'autres caractéristiques et avantages de l'invention apparaîtront à la lecture de la suite de la description, donnée à titre d'exemple non limitatif, en référence aux dessins annexés qui représentent respectivement :
- Figure 1, une vue en perspective d'une aube conforme à l'invention ;
- Figure 2 ; une vue partielle d'une aube en coupe dans un plan perpendiculaire à un axe radial; et
- Figure 3 ; une vue partielle d'une aube en coupe dans un plan perpendiculaire à un axe radial, selon l'invention.

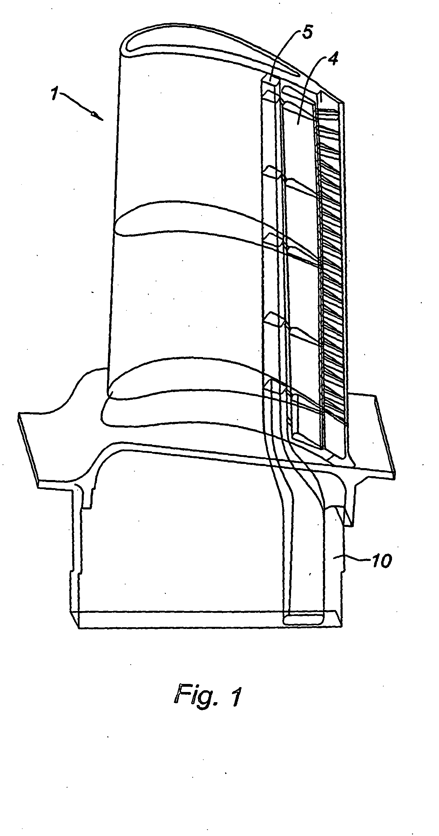

La figure 1 représente une aube mobile 1 de turbine comportant une paroi intrados 2, une paroi extrados 3 ainsi qu'une pluralité de cavités radiales 4 et 5. On entend par cavité radiale, une cavité disposée selon un rayon issu de l'axe de rotation de la turbomachine lorsque l'aube est dûment montée sur la turbomachine. Un axe dit radial est un axe se confondant avec un tel rayon. Sur cette figure 1, seules deux cavités radiales 4 et 5, situées à l'aval par rapport à l'écoulement de l'air autour de l'aube 1, sont représentées. On y distingue, d'une part, une première cavité radiale 4, située à proximité directe du bord de fuite de l'aube, appelée cavité de bord de fuite et, d'autre part, une seconde cavité radiale 5 adjacente et située en amont de la première cavité radiale de bord de fuite 4. Ces deux cavités radiales 4 et 5 sont séparées par une paroi interne 6 comportant une pluralité de canaux 8, comme représentées sur la figure 2.

Le refroidissement de la seconde cavité radiale 5 est assuré par une alimentation en air de refroidissement injecté par le pied 10 de l'aube 1. Le refroidissement de la première cavité radiale de bord de fuite 4 est assuré par ce même air de refroidissement qui passe à travers les canaux 8. L'air de refroidissement est ensuite expulsé à l'extérieur de l'aube 1 par des canaux de sortie 9.

Les canaux 8 de la paroi interne 6, ainsi que les cavités radiales 4 et 5, peuvent être obtenus selon une technique de moulage à cire perdue, bien connue de l'homme du métier.

Le plus souvent ces canaux 8 ont une section de forme oblongue selon une direction radiale. D'autres formes de section de canal 8 sont possibles. L'axe 81 d'un canal 8, c'est-à-dire la droite perpendiculaire au plan de la section et passant par le centre de la section, définit la direction souhaitée de l'écoulement de l'air de refroidissement en sortie du canal 8. L'axe des canaux 8 est donc perpendiculaire à une direction radiale. Par approximation sur la figure 2, une tangente d'une portion du squelette 11, passant à travers la paroi interne 6, est assimilable à l'axe 81 du canal 8.

La tangente de la portion du squelette 11 passant à travers la paroi interne 6 coupe donc perpendiculairement cette paroi 6.

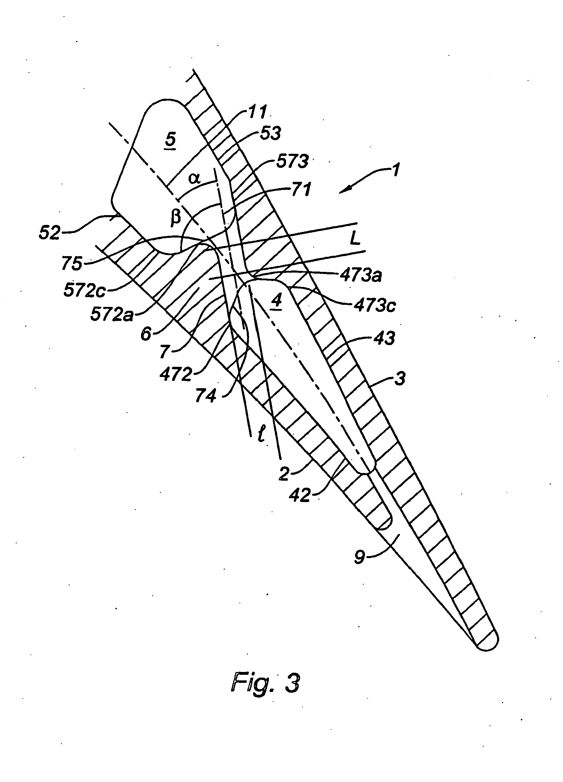

La figure 3 illustre la solution proposée par l'invention pour améliorer la durée de vie des aubes qui consiste à réaliser au moins un canal 7 orienté selon un axe 71 coupant la surface interne 42 de la paroi intrados 2. Cette inclinaison de l'axe 71 en direction de la surface interne 42 de la paroi intrados 2 permet avantageusement de refroidir plus intensément la paroi intrados 2 que la paroi extrados 3. L'air de refroidissement en sortie de ces canaux 7 est en effet directement projeté sur la surface interne 42 de la paroi intrados 2. Le gradient thermique constaté dans l'art antérieur entre la paroi intrados 2 et la paroi extrados 3 est donc sensiblement atténué, ce qui contribue à améliorer la tenue mécanique de l'aube 1 et par là-même sa durée de vie.

L'axe 71 de chaque canal 7 est incliné d'un angle α par rapport à une tangente à une portion du squelette 11 de l'aube 1, ladite portion de squelette 11 étant localisée à l'intérieur du canal 7, contrairement aux axes 81 des canaux 8 de l'art antérieur qui sont quasiment parallèles à cette tangente. L'angle α est compris entre 5° et 70°, de préférence 5° et 35°, un angle de 25° fournissant des résultats satisfaisants.

L'étroitesse des canaux 7 permet sous l'action de la pression dans la cavité radiale 5 de projeter l'air de refroidissement de manière à favoriser les échanges thermiques par convection. Les canaux 7 sont évasés en leurs extrémités aval 74 et amont 75 débouchant respectivement dans les cavités radiales 4 et 5. En raison de ces évasements en forme de congé pour faciliter le moulage, l'air de refroidissement risque d'être mal projeté sur la surface interne 42 de la paroi intrados 2 dans la cavité radiale de bord de fuite 4.

Pour un refroidissement efficace par convection, un canal 7 doit présenter une longueur de guidage L suffisante. La longueur de guidage est la longueur maximale du canal présentant une section sensiblement constante. On estime que la longueur de guidage L est suffisante lorsque le rapport de la longueur de guidage L sur la largeur de guidage 1, c'est-à-dire la largeur de la section dans un plan perpendiculaire à un axe radial, est supérieur à 1. La longueur de guidage L doit donc être supérieure à la largeur de guidage I. De préférence, ce rapport est supérieur à 1,5. Cette longueur de guidage L permet de garantir un bon refroidissement par convection de la surface interne 42 de la paroi intrados 2 dans la première cavité radiale de bord de fuite 4.

Pour réaliser simultanément une inclinaison suffisante de l'axe 71 du canal 7 et une longueur de guidage L suffisante, sans modifier excessivement les dimensions des cavités radiales 4 et 5, l'extrémité amont 75 du canal 7 est adjacent à la surface interne 53 de la paroi extrados 3 dans la seconde cavité radiale 5 et l'extrémité aval 74 du canal 7 est adjacent à la surface interne 42 de la paroi intrados 2 dans la première cavité radiale de bord de fuite 4.

Selon une caractéristique essentielle de l'invention, l'extrémité amont 75 du canal 7 est raccordée à sa sortie dans la cavité radiale 5, d'une part, à la surface interne 53 par un congé 573 à fort rayon de courbure, et d'autre part, à la surface interne 52 successivement par un arrondi 572a et un congé 572c à faibles rayons de courbure, tandis que l'extrémité aval 74 du canal 7 est raccordée à sa sortie dans la cavité radiale de bord de fuite 4, d'une part, à la surface interne 42 par un congé 472 à fort rayon de courbure, et d'autre part, à la surface interne 43 successivement par un arrondi 473a et un congé 473c à faibles rayons de courbure.

L'avantage de ces raccordements est de mieux canaliser l'écoulement au moyen d'une restriction progressive de la section du canal. Ainsi, les pertes de pression sont amoindries lors de l'écoulement à travers le canal. Dans les documents US 6368060 et US 4770608, au contraire, le canal est raccordé aux parois des cavités par des angles vifs de sorte que des pertes de charge sont provoquées. Si la pression devient insuffisante dans la cavité de bord de fuite, le refroidissement n'est pas efficace.

Dans le plan perpendiculaire de la section d'aube 1 partielle, représentée sur la figure 3, les arrondis 572a et 473a ont la forme de protubérances faisant saillie depuis les surfaces internes intrados et extrados en direction du squelette 11.

La cavité radiale de bord de fuite 4 peut comporter en outre sur ses surfaces internes 42 et 43 des perturbateurs. Les perturbateurs sont des reliefs réalisés sur les surfaces internes des aubes afin de favoriser les échanges thermiques. Les perturbateurs peuvent prendre la forme de nervure ou de téton faisant saillie.

Pour un refroidissement uniformément réparti sur toute la hauteur de l'aube 1, les canaux 7 sont répartis radialement le long de la hauteur de la paroi interne 6.

## Revendications

1. Aube de turbine (1), comportant une paroi intrados (2), une paroi extrados (3), au moins une première cavité radiale de bord de fuite (4), au moins une seconde cavité radiale (5) en amont de la cavité de bord de fuite (4), une paroi interne (6) séparant les cavités radiales (4 et 5) et comprenant au moins un canal (7) reliant les cavités (4 et 5) entre elles, ledit canal (7) étant orienté selon un axe (71) coupant la surface interne (42) de la paroi intrados (2) dans la première cavité radiale de bord de fuite (4), **caractérisée en ce que** l'extrémité amont (75) du canal (7) est raccordée à sa sortie dans la cavité radiale (5), d'une part, à la surface interne (53) par un congé (573) à fort rayon de courbure, et d'autre part, à la surface interne (52) successivement par un arrondi (572a) et un congé (572c) à faibles rayons de courbure, tandis que l'extrémité aval (74) du canal (7) est raccordée à sa sortie dans la cavité radiale de bord de fuite (4), d'une part, à la surface interne (42) par un congé (472) à fort rayon de courbure, et d'autre part, à la surface interne (43) successivement par un arrondi (473a) et un congé (473c) à faibles rayons de courbure.

2. Aube de turbine (1) selon la revendication 1 **caractérisée en ce que** ledit axe (71) est incliné d'un angle (α) compris entre 5° et 70° par rapport à une tangente à une portion d'un squelette (11) de l'aube, ladite portion de squelette (11) étant localisée à l'intérieur du canal (7).

3. Aube de turbine (1) selon la revendication 2 **caractérisée en ce que** ledit angle (α) est compris entre 5° et 35°.

4. Aube de turbine (1) selon la revendication 3 **caractérisée en ce que** l'angle (α) est égal à 25°.

5. Aube de turbine (1) selon l'une quelconque des revendications précédentes **caractérisée en ce que** le canal (7) comprend une longueur de guidage (L) et une largeur de guidage (I), le rapport de la longueur de guidage (L) sur la largeur de guidage (I) étant supérieur à 1.

6. Aube de turbine (1) selon la revendication 5 **caractérisée en ce que** le rapport de la longueur de guidage (L) sur la largeur de guidage (I) est supérieur à 1,5.

7. Aube de turbine (1) selon l'une quelconque des revendications précédentes **caractérisée en ce que** les canaux (7) sont répartis radialement le long de la hauteur de la paroi interne (6).

8. Aube de turbine (1) selon l'une quelconque des revendications précédentes **caractérisée en ce que** au moins une surface interne (42 ou 43) de la cavité radiale de bord de fuite (4) comporte des perturbateurs.

9. Aube (1) mobile de turbine selon l'une quelconque des revendications 1 à 8.

10. Aube (1) fixe de turbine selon l'une quelconque des revendications 1 à 8.

11. Turbine comportant au moins une aube de turbine (1) selon l'une quelconque des revendications précédentes.

12. Turbomachine comportant une turbine selon la revendication précédente.

## Claims

1. A turbine blade (1) comprising a pressure face wall (2), a suction face wall (3), at least one first trailing edge radial cavity (4), at least one second radial cavity (5) upstream of the trailing edge cavity (4), an internal wall (6) separating the radial cavities (4 and 5) and comprising at least one channel (7) interconnecting the cavities (4 and 5), the said channel (7) being oriented along an axis (71) which intersects the internal surface (42) of the pressure face wall (2) in the first trailing edge radial cavity (4), **characterized in that** the upstream end (75) of the channel (7) is connected at its outlet into the radial cavity (5), on the one hand, to the internal surface (53) by a fillet (573) with a large radius of curvature and, on the other hand, to the internal surface (52) successively by a rounded portion (572a) and a fillet (572c) with small radii of curvature, whereas the downstream end (74) of the channel (7) is connected at its outlet into the trailing edge radial cavity (4), on the one hand, to the internal surface (42) by a fillet (472) with a large radius of curvature and, on the other hand, to the internal surface (43) successively by a rounded portion (473a) and a fillet (473c) with small radii of curvature.

2. Turbine blade (1) according to Claim 1, **characterized in that** the said axis (71) is inclined by an angle (α) of between 5° and 70° with respect to a tangent to a portion of a skeleton line (11) of the blade, the said skeleton line portion (11) being located inside the channel (7).

3. Turbine blade (1) according to Claim 2, **characterized in that** the said angle (α) is between 5° and 35°.

4. Turbine blade (1) according to Claim 3, **characterized in that** the angle (α) is equal to 25°.

5. Turbine blade (1) according to any one of the preceding claims, **characterized in that** the channel (7) comprises a guide length (L) and a guide width (1), the ratio of the guide length (L) to the guide width (1) being greater than 1.

6. Turbine blade (1) according to Claim 5, **characterized in that** the ratio of the guide length (L) to the guide width (1) is greater than 1.5.

7. Turbine blade (1) according to any one of the preceding claims, **characterized in that** the channels (7) are distributed radially along the height of the internal wall (6).

8. Turbine blade (1) according to any one of the preceding claims, **characterized in that** at least one internal surface (42 or 43) of the trailing edge radial cavity (4) comprises disrupters.

9. Moving turbine blade (1) according to any one of Claims 1 to 8.

10. Fixed turbine blade (1) according to any one of Claims 1 to 8.

11. Turbine comprising at least one turbine blade (1) according to any one of the preceding claims.

12. Turbomachine comprising a turbine according to the preceding claim.

## Patentansprüche

1. Turbinenschaufel (1), die eine Druckseitenwand (2), eine Saugseitenwand (3), mindestens einen ersten radialen Austrittskantenhohlraum (4), mindestens einen zweiten radialen Hohlraum (5) stromaufwärts des Hinterkantenhohlraums (4), eine Innenwand (6), die die radialen Hohlräume (4 und 5) trennt und mindestens einen die Hohlräume (4 und 5) miteinander verbindenden Kanal (7) umfasst, wobei der Kanal (7) entlang einer die Innenfläche (42) der Druckseitenwand (2) in dem ersten radialen Austrittskantenhohlraum (4) schneidenden Achse (71) angeordnet ist, **dadurch gekennzeichnet, dass** das stromaufwärtige Ende (75) des Kanals (7) an seinem Ausgang in dem radialen Hohlraum (5) einerseits durch eine Kehle (573) mit starkem Krümmungsradius mit der Innenfläche (53) und andererseits nacheinander durch eine Abrundung (572a) und eine Kehle (572c) mit geringen Krümmungsradien mit der Innenfläche (52) verbunden ist, während das stromabwärtige Ende (74) des Kanals (7) an seinem Ausgang in dem radialen Austrittskantenhohlraum (4) einerseits durch eine Kehle (472) mit starkem Krümmungsradius mit der Innenfläche (42) und andererseits nacheinander durch eine Abrundung (473a) und eine Kehle (473c) mit geringen Krümmungsradien mit der Innenfläche (43) verbunden ist.

2. Turbinenschaufel (1) nach Anspruch 1, **dadurch gekennzeichnet, dass** die Achse (71) in einem Winkel (α) in einem Bereich zwischen 5º und 70º bezüglich einer Tangente an einem Teil einer Skelettlinie (11) der Schaufel geneigt ist, wobei sich der Teil der Skelettlinie (11) im Inneren des Kanals (7) befindet.

3. Turbinenschaufel (1) nach Anspruch 2, **dadurch gekennzeichnet, dass** der Winkel (α) zwischen 5º und 35º liegt.

4. Turbinenschaufel (1) nach Anspruch 3, **dadurch gekennzeichnet, dass** der Winkel (α) 25º beträgt.

5. Turbinenschaufel (1) nach einem der vorhergehenden Ansprüche, **dadurch gekennzeichnet, dass** der Kanal (7) eine Führungslänge (L) und eine Führungsbreite (1) umfasst, wobei das Verhältnis der Führungslänge (L) zur Führungsbreite (1) größer als 1 ist.

6. Turbinenschaufel (1) nach Anspruch 5, **dadurch gekennzeichnet, dass** das Verhältnis der Führungslänge (L) zur Führungsbreite (1) größer als 1,5 ist.

7. Turbinenschaufel (1) nach einem der vorhergehenden Ansprüche, **dadurch gekennzeichnet, dass** die Kanäle (7) radial entlang der Höhe der Innenwand (6) verteilt sind.

8. Turbinenschaufel (1) nach einem der vorhergehenden Ansprüche, **dadurch gekennzeichnet, dass** mindestens eine Innenfläche (42 oder 43) des radialen Austrittskantenhohlraums (4) Störelemente aufweist.

9. Turbinenlaufschaufel (1) nach einem der Ansprüche 1 bis 8.

10. Turbinenleitschaufel (1) nach einem der Ansprüche 1 bis 8.

11. Turbine, die mindestens eine Turbinenschaufel (1) nach einem der vorhergehenden Ansprüche umfasst.

12. Turbomaschine, die eine Turbine nach dem vorhergehenden Anspruch umfasst.
